# EUROPEAN PATENT APPLICATION

(11) **EP 4 656 662 A1**
(43) Date of publication of application: **03.12.2025**
(21) Application number: 24178305.9
(22) Date of filing: 27.05.2024
(51) Int. Cl.: C08G 18/12, C08G 18/20, C08G 18/22, C08G 18/28, C08G 18/40, C08G 18/44, C08G 18/76, C09J 175/04, C08G 18/30

(54) **FAST CURING REACTIVE POLYURETHANE ADHESIVE COMPOSITION**

(71) Applicant: Sika Technology AG, 6340 Baar (CH)
(72) Inventor: MATSUKI, Yuichi, Kanagawa, 254-0014 (JP)
(74) Representative: Sika Patent Attorneys

(57) **Abstract**

The invention relates to an adhesive composition comprising:
a) A polyurethane polymer PU having isocyanate groups,
b) At least one complexing agent CA, and
c) At least one metal catalyst C that can catalyze reactions between isocyanate groups and isocyanate reactive groups and that can build thiol complexes,
wherein the complexing agent CA is a sulfide compound having at least one hydrolysable silane group.

## Description

### Technical field

The invention relates to one-part reactive polyurethane adhesives, such as hot-melt adhesives, and to the use of these in industrial lamination and packaging applications and in assembly of automotive vehicles and electronic devices. Particularly, the reactive polyurethane adhesive exhibits fast curing behavior and excellent adhesion on metal substrates.

### Background of the invention

Hot-melt adhesives are solvent free one-part (component) adhesives, which are solid at room temperature and which are applied to the substrate to be bonded in form of a melt. After cooling the adhesive solidifies and forms an adhesive bond with the substrate through physically occurring bonding. Conventional hot-melt adhesives are non-reactive adhesives, which soften again upon heating and are, therefore, not suitable to be used at elevated temperatures. Reactive hot-melt adhesives contain polymers with reactive groups that enable chemical curing of the adhesive, for example, by crosslinking of the polymer chains. Due to the chemically crosslinked polymer matrix the reactive hot-melt adhesives do not soften upon heating and these adhesives are, therefore, suitable for use also at elevated temperatures. The chemical curing of the polymers can be initiated, for example, by heating or exposing the adhesive composition to water. Moisture curing adhesives typically contain polymers functionalized with isocyanate or silane groups, which enable the crosslinking of the polymer chains upon contact with water, particularly with atmospheric moisture.

Typical reactive adhesives used in industrial applications, such as in assembly of automotive vehicles and electronic devices, include moisture curing polyurethane- and polyolefin- based hot melt adhesives. Moisture curing polyurethane adhesive and polyurethane hot-melt (PU-RHM) adhesives consist mainly of isocyanate-terminated polyurethane prepolymers, which have been obtained by reacting suitable polyols, typically diols, with a stoichiometric excess of polyisocyanates, typically diisocyanates. When contacted with water, the free isocyanate groups of the polyurethane prepolymers form carbamic acid, which is unstable and decomposes into an amine and carbon dioxide. The amine reacts rapidly with other isocyanate groups to form urea linkages. Moisture curing polyolefin hot-melt (PO-RHM) adhesives typically consist mainly of amorphous poly-α-olefins (APAOs), which have been functionalized with silane groups. When contacted with water, the silane groups of the polyolefin polymers, such as methoxysilane groups, react with water to form silanols, which subsequently undergo reaction with other silanol groups to form covalent bonds between individual polymer molecules as part of a condensation reaction.

A significant disadvantage of the conventional moisture curing adhesives is that the speed of the curing reactions is quite low and the time required for the adhesive to reach a fully cured state is accordingly relatively long. Furthermore, especially for thicker adhesive layers, the curing reactions are severely limited by the diffusion of moisture in the adhesive layer, which results in formation of curing gradients and longer curing time. An obvious solution to the problem related slow curing behavior of reactive polyurethane adhesives is to use a catalyst to accelerate the moisture triggered curing reactions. However, the use of metal catalyst is known have a negative impact on the thermal stability of the adhesive composition, particularly when aromatic monomeric diisocyanates, such as methylene diphenyl diisocyanate (MDI), are used in providing the polyurethane polymers of a reactive adhesive composition. Other types of catalysts, such as tertiary amines, for example dimorpholinodiethylether (DMDEE) catalysts, have less impact on the thermal stability of the adhesive but such adhesives often exhibit decreased bonding to metal substrates.

It is also known to use additives that function as latent hardeners in the adhesive composition, such as aldimines, oxazolidines, and ketimines. Such latent hardeners react with water producing amines, which then react with the isocyanate groups of the polyurethane prepolymer preventing the formation of carbon dioxide from the reaction of isocyanate groups with water. However, the residues of the hydrolysis reaction of the latent hardeners can volatilize resulting in generation of unpleasant smells or they can have a negative impact on the adhesive properties. The above discussed disadvantages related to the use of aldimines, oxazolidines, and ketimines are especially pronounced if these types of latent hardeners are used in reactive hot-melt adhesives, which are heated to high temperatures to be applied in form of a melt.

It would therefore be desirable to provide a novel type of reactive polyurethane adhesive that exhibits a fast curing behavior and good thermal stability. Such adhesive composition would be especially suitable for use in industrial lamination and packaging applications and in assembly of automotive vehicles and electronic devices.

### Summary of the invention

The object of the present invention is to provide a reactive adhesive composition, particularly a one-part reactive adhesive composition, which overcomes or at least mitigates the disadvantages of the prior art reactive adhesives as discussed above.

Especially, it is an object of the present invention to provide a fast curing one-part reactive adhesive composition based on the use of isocyanate-functional polyurethane prepolymers. The adhesive composition should preferably exhibit good thermal stability excellent adhesion to polar substrates, especially metal substrates.

Surprisingly it has been found out that the objects can be achieved with the features of claim 1.

Specifically, according to the invention, one-part adhesive composition is proposed, the composition comprising:
a) A polyurethane polymer **PU** having isocyanate groups,
b) At least one complexing agent **CA,** and
c) At least one metal catalyst **C** that can catalyze reactions between isocyanate groups and isocyanate reactive groups and that can build thiol complexes,
wherein the complexing agent **CA** is a sulfide compound having at least one hydrolysable silane group.

As it turned out, a combination of a polyurethane prepolymer **PU** and a special catalyst system comprising the metal catalyst **C** and a sulfide compound having at least one hydrolysable silane group as the complexing agent **CA** enables providing a fast curing one-part reactive adhesive exhibiting a good thermal stability and excellent bonding to polar substrates, especially to metal substrates.

Additional aspects of the present invention are presented in further independent claims. Preferred embodiments of the invention are outlined throughout the description and the dependent claims.

### Detailed description of the invention

The subject of the present invention is one-part adhesive composition comprising:
a) A polyurethane polymer **PU** having isocyanate groups,
b) At least one complexing agent **CA,** and
c) At least one metal catalyst **C** that can catalyze reactions between isocyanate groups and isocyanate reactive groups and that can build thiol complexes,
wherein the complexing agent **CA** is a sulfide compound having at least one hydrolysable silane group.

The term "one-part" refers to an adhesive composition, which is contained in a single container, preferably a moisture-tight container, and which composition has a certain storage stability. The term "storage stability" refers to the ability of a composition to be stored at normal room temperature in a suitable container under exclusion of moisture for a certain time interval, in particular several months, without undergoing significant changes in application or end-use properties.

The prefix "poly" in substance designations such as "polyol" or "polyisocyanate" refers to substances which in formal terms contain two or more per molecule of the functional group that occurs in their designation. A polyol, for example, is a compound having two or more hydroxyl groups, and a polyisocyanate is a compound having two or more isocyanate groups.

The term "polymer" refers to a collective of chemically uniform macromolecules produced by a polyreaction (polymerization, polyaddition, polycondensation) where the macromolecules differ with respect to their degree of polymerization, molecular weight and chain length. The term also comprises derivatives of said collective of macromolecules resulting from polyreactions, that is, compounds which are obtained by reactions such as, for example, additions or substitutions, of functional groups in predetermined macromolecules and which may be chemically uniform or chemically non-uniform.

An isocyanate is called "aliphatic" when its isocyanate group is directly bound to an aliphatic, cycloaliphatic or arylaliphatic moiety. The corresponding functional group is therefore called an aliphatic isocyanate group. Furthermore, an isocyanate is called "aromatic" when its isocyanate group is directly bound to an aromatic moiety. The corresponding functional group is therefore called an aromatic isocyanate group.

The term "functionalized polymer" designates polymers which are chemically modified so as to contain a functional group on the polymer backbone. In contrast, the term "non-functionalized polymer" designates polymers which are not chemically modified so as to contain functional groups such as epoxy, silane, sulfonate, amide, or anhydride group on the polymer backbone.

The term "molecular weight" refers to the molar mass (g/mol) of a molecule or a part of a molecule, also referred to as "moiety". The term "average molecular weight" refers to number average molecular weight (Mₙ) of an oligomeric or polymeric mixture of molecules or moieties. The molecular weight can be determined by conventional methods, preferably by gel permeation-chromatography (GPC) using polystyrene as standard, styrenedivinylbenzene gel with porosity of 100 Angstrom, 1000 Angstrom and 10000 Angstrom as the column, and depending on the molecule, tetrahydrofurane as a solvent, at a temperature of 35°C or 1,2,4-trichlorobenzene as a solvent, at 160 °C.

The term "softening temperature" designates a temperature at which compound softens in a rubber-like state, or a temperature at which the crystalline portion within the compound melts. The softening temperature can be measured by a Ring and Ball method according to EN 1238:2011 standard.

The term "glass transition temperature" (T_{g}) designates the temperature above which temperature a polymer component becomes soft and pliable, and below which it becomes hard and glassy. The glass transition temperature (T_{g}) is preferably determined by dynamical mechanical analysis (DMA) as the peak of the measured loss modulus (G") curve using an applied frequency of 1 Hz and a strain level of 0.1 %.

The term "melting temperature" refers to a temperature at which a material undergoes transition from the solid to the liquid state. The melting temperature (Tₘ) is preferably determined by differential scanning calorimetry (DSC) according to ISO 11357-3:2018 standard using a heating rate of 2 °C/min. The measurements can be performed with a Mettler Toledo DSC 3+ device and the Tₘ values can be determined from the measured DSC-curve with the help of the DSC-software. In case the measured DSC-curve shows several peak temperatures, the first peak temperature coming from the lower temperature side in the thermogram is taken as the melting temperature (Tₘ).

The term "open time" designates the length of a time period during which an adhesive applied to a surface of a substrate is still able to form an adhesive bond after being contacted with another substrate.

The "amount or content of at least one component X" in a composition, for example "the amount of the at least one polyurethane polymer PU" refers to the sum of the individual amounts of all polyurethane polymers PU contained in the composition. For example, in case the composition comprises 20 wt.-% of at least one polyurethane polymer PU, the sum of the amounts of all polyurethane polymers PU contained in the composition equals 20 wt.-%.

The term "room temperature" refers to a temperature of ca. 23 °C.

In this document, the use of the term "independently" in connection with substituents, radicals, or groups should be interpreted such that the substituents, radicals, or groups having the same designation in the same molecule may occur simultaneously with different meanings.

In one embodiment, the one-part adhesive composition is a hot-melt adhesive composition. The term "hot-melt adhesive" refers in the present disclosure to solvent free one-part adhesives, which are solid at room temperature and which are applied to the substrate to be bonded in form of a melt. After cooling the adhesive solidifies and forms an adhesive bond with the substrate through physically occurring bonding.

In another embodiment, the one-part adhesive composition is a at normal room temperature liquid adhesive composition. The term "liquid adhesive composition" refers in the present disclosure to adhesive compositions that remain in a liquid state when stored at normal room temperature in a suitable container under exclusion of moisture for a certain time interval, particularly several months.

The complexing agent **CA** contained in the adhesive composition is a sulfide compound having at least one hydrolysable silane group.

The term "sulfide compound" refers in the present disclosure to chemical compounds containing at least one sulfur atom and at least one other element in the chemical formula of the compound.

Furthermore, the term the term "silane" designates compounds which in the first instance have at least one, customarily two or three, hydrolyzable groups bonded directly to the silicon atom via Si-O- bonds, more particularly alkoxy groups or acyloxy groups, and in the second instance have at least one organic radical bonded directly to the silicon atom via an Si-C bond. Silanes with alkoxy or acyloxy groups are also known to the person skilled in the art as organoalkoxysilanes and organoacyloxysilanes, respectively. Tetraalkoxysilanes, consequently, are not silanes under this definition.

Correspondingly, the term "silane group" designates the silicon-containing group bonded to the organic carbon radical via the Si-C bond. The silanes, and their silane groups, have the property of undergoing hydrolysis on contact with moisture. In so doing, they form organosilanols, these being organosilicon compounds containing one or more silanol groups (Si-OH groups) and, by subsequent condensation reactions, organosiloxanes, these being organosilicon compounds containing one or more siloxane groups (Si-O-Si groups).

Particularly, the complexing agent **CA** may be selected from sulfur silanes and mercapto silanes.

Suitable mercapto silanes for use as the complexing agent **CA** include, for example, 3-mercaptomethyltrimethoxysilane, 3-mercaptopropyltrimethoxysilane, 3-mercaptopropyltriethoxysilane, and 3-octanoylthio-1-propyl)triethoxysilane.

In one embodiment, the complexing agent CA is a compound of formula (I) 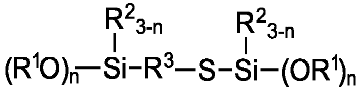
where R¹ and R² are each independently of each other a hydrocarbon group that may have one or more heteroatoms, preferably having 1 to 8 carbon atoms,
n is an integer of 1 to 3, and
R³ is a hydrocarbon group that may have one or more heteroatoms, preferably having 1 to 12 carbon atoms.

It may be preferred that in the above formula (I) R¹ and R² are each independently of each a hydrocarbon group having 1 to 5 carbon atoms, preferably 1 to 3 carbon atoms, n is 3, and R³ is a hydrocarbon group having 1 to 8 carbon atoms, preferably 1 to 5 carbon atoms.

In one embodiment, the complexing agent **CA** is a triethoxysilyl 3-(trimethoxysilyl)propyl sulfide.

In one embodiment, the molar ratio of all sulfur atoms in the complexing agent **CA** to all metal atoms in the complexing agent **CA** is in the range of 1:1 to 20:1, preferably 2:1 to 15:1, more preferably 5:1 to 15:1.

The molar ratios between the complexing agent **CA** and the metal catalyst **C** falling within the above cited ranges allows controlling the curing speed of the adhesive composition, specifically within the intrinsic limits of the particular composition, by, for example, adjusting the content of the catalyst **C**, the reactivity of the polyisocyanates present in the adhesive composition, and the amounts thereof.

It may also be preferable that the sum of the amounts of the complexing agent **CA** and the metal catalyst **C** makes up 0.01 - 1.0 wt.-%, preferably 0.05 - 0.5 wt.-%, more preferably 0.1 - 0.5 wt of the total weight of the adhesive composition.

Examples of suitable metal catalysts **C** include bismuth, zinc, tin, zirconium, titanium, iron, lead, and aluminum compounds, especially salts and complexes of these metals in which an ion of the metal serves as the central element with at least one type of counterion and/or ligand, for example, at least one of carboxylic acids, ketones and esters having an alkyl group of 1 to 30 carbon atoms.

Particularly, suitable metal compounds for use as the catalyst **C** include, for example, metal carboxylates such as tin bis(2-ethylhexanoate), zinc bis(2-ethylhexanoate), iron bis(2-ethylhexanoate), iron tris(2-ethylhexanoate), zirconium bis(2-ethylhexanoate), zirconium tetra(2-ethylhexanoate), bismuth tris(2-ethylhexanoate) and tin versatate; tetravalent organotin compounds such as dibutyltin dilaurate, dibutyltin maleate, dibutyltin phthalate, dibutyltin dioctanoate, dibutyltin bis(2-ethylhexanoate), dibutyltin bis(methyl maleate), dibutyltin bis(ethyl maleate), dibutyltin bis(butyl maleate), dibutyltin bis(octyl maleate), dibutyltin bis(tridecyl maleate), dibutyltin bis(benzyl maleate), dibutyltin diacetate, dioctyltin bis(ethyl maleate), dioctyltin bis(octyl maleate), dibutyltin dimethoxide, dibutyltin bis(nonyl phenoxide), dibutenyltin oxide, dibutyltin bis(acetyl acetonate), dibutyltin bis(ethyl acetoacetate), the reaction products of dibutyltin oxide with silicate compounds, the reaction products of dialkyltin dicarboxylates such as dibutyltin dilaurate with silicate compounds, and the reaction products of dibutyltin oxide with phthalic acid esters; organotitanates such as tetraisopropoxytitanium, tetra-n-butoxytitanium, dipropoxy bis(triethanolaminate)titanium, diisopropoxy bis(triethanolaminate)titanium, diisopropoxy bis(acetylacetonate)titanium and diisopropoxy bis(ethyl acetoacetate)titanium; and organoaluminum compounds such as aluminum tris(acetylacetonate), aluminum tris(ethyl acetoacetate) and diisopropoxyaluminum ethyl acetoacetate; and zirconium compounds such as zirconium tetrakis(acetyl acetonate).

Especially suitable bismuth compounds include bismuth(III) compounds, such as bismuth carboxylates, for example bismuth acetate, oleate, octoate, bismuth ethylhexanoate, or neodecanoate, bismuth nitrate, bismuth halides such as the bromide, chloride, or iodide, bismuth sulfide, basic bismuth carboxylates such as bismuthyl neodecanoate, bismuth subgallate or bismuth subsalicylate, and mixtures thereof.

Particularly preferred tin compounds include organotin compounds, especially organotin(IV) compounds, preferably selected from dibutyltin diacetate, dibutyltin dilaurate, dibutyltin dichloride, dibutyltin diacetylacetonate, dimethyltin dilaurate, dioctyltin diacetate, dioctyltin dilaurate, dioctyltin diacetylacetonate, bis[(2-ethyl-1-oxohexyl)oxy]dioctylstannane, bis(neodecanoyloxy)dioctylstannane, bis(dodecylthio)dioctylstannane, and bis(dodecylthio)dimethylstannane.

In one embodiment, the metal catalyst **C** is selected from salts and complexes of bismuth, tin, and zirconium, preferably of bismuth (III) or zirconium (IV), particularly with ligands selected from alcoholates, carboxylates, 1,3-diketonates, oxinates, 1,3-ketoesterates, and 1,3-ketoamidates.

In one further embodiment, the metal catalyst **C** is a bismuth(III) complex containing at least one ligand based on 8-hydroxyquinoline or a bismuth(III) complex containing at least one ligand based on a 1,3-ketoamide or a bismuth(III) salt of 2-ethylhexanoic acid.

Examples of a bismuth(III) complex containing at least one ligand based on 8-hydroxyquinoline are described in EP 1551895 A1. Such compound is preferably a bismuth(III) carboxylate containing one molar equivalent of an 8-hydroxyquinoline ligand.

Examples of bismuth(III) complex containing at least one ligand based on a 1,3-ketoamide are described in EP 2791153. Such compound is preferably a bismuth(III) carboxylate containing 1 to 3 molar equivalents of a 1,3-ketoamide ligand.

In one exemplary embodiment, the metal catalyst **C** is bismuth(III) tris(2-ethylhexanate). Such metal catalyst are commercially available, for example, under the trade name of Neostann^{®} U-600 (from Nitto Kasei Co., LTD.).

In one embodiment, the adhesive composition comprises at least 65 wt.-%, preferably at least 75 wt.-%, more preferably at least 85 wt.-% of the polyurethane prepolymer **PU.**

In this document, the term "polyurethane polymer" refers to polymers prepared by the so called diisocyanate polyaddition process. These also include polymers which are virtually or entirely free from urethane groups. Examples of polyurethane polymers are polyether-polyurethanes, polyester-polyurethanes, polyether-polyureas, polyureas, polyester-polyureas, polyisocyanurates and polycarbodiimides.

Furthermore, the term "polyurethane prepolymer" designates polyurethane polymers comprising one or more unreacted isocyanate groups. The polyurethane prepolymers can be obtained by reacting excess of polyisocyanates with polyols and they are polyisocyanates themselves. The terms "isocyanate-functional polyurethane polymer" and "polyurethane prepolymer" can be used interchangeably.

In one or more embodiments, the polyurethane prepolymer **PU** is obtained by reacting at least one polyol **PO** with at least one diisocyanate **PI**, wherein the molar ratio between isocyanate groups and hydroxyl groups is preferably in the range of 1.3 - 3.5, more preferably 1.5 - 3.0.

The reaction between the polyol **PO** and diisocyanate **I** may, for example, be carried out at temperatures in the range of 60 - 160 °C, preferably 80 - 140 °C, with or without the presence of a catalyst. The reaction time, as will be appreciated, depends on the temperature employed, but may, for example, be in the range of from 30 minutes to 6 hours, preferably from 30 minutes to 3 hours, more preferably from 30 minutes to 1.5 hours. Suitable catalysts include, for example, metal catalysts, such as Coscat^{®}83 (from Vertellus Performance Materials Inc.), and tin catalysts.

In one or more embodiments, the polyurethane prepolymer **PU** has an average isocyanate-functionality determined according to ISO 14896-2009 standard method A in the range of 1.2 - 3.0, preferably 1.5 - 2.5 and/or an isocyanate content determined by using the method as defined in ISO 11909:2007 standard in the range of 0.5 - 25 wt.-%, preferably 1.0 - 20 wt.-%.

Especially suitable diisocyanates **PI** include monomeric aliphatic, cyclo-aliphatic, and aromatic diisocyanates.

The term "monomeric diisocyanate" refers in the present document to an organic compound with two isocyanate groups that are separated by a divalent hydrocarbon radical, preferably having an average molecular weight of not more than 1000 g/mol. Particularly, a monomeric diisocyanate contains no urethane groups and oligomers or polymer products of diisocyanate monomers, such as adducts of monomeric diisocyanates, are not considered to be "monomeric diisocyanates" in the context of the present invention.

Preferably, the diisocyanate **PI** is monomeric diisocyanate, more preferably a monomeric diisocyanate having a number average molecular weight (Mₙ) of not more than 750 g/mol, preferably not more than 500 g/mol, more preferably not more than 350 g/mol.

Examples of suitable monomeric diisocyanates include aliphatic and aromatic monomeric diisocyanates, for example, 1,6-hexamethylene diisocyanate (HDI), 2-methylpentamethylene 1,5-diisocyanate, 2,2,4- and 2,4,4-trimethyl-1,6-hexamethylene diisocyanate (TMDI) and mixtures of these isomers, 1,10 decamethylene diisocyanate, 1,12-dodecamethylene diisocyanate, lysine diisocyanate, lysine ester diisocyanate, cyclohexane 1,3-diisocyanate and cyclohexane 1,4-diisocyanate and mixtures of these isomers, 1-methyl-2,4- and -2,6-diisocyanatocyclohexane and mixtures of these isomers (HTDI or H6TDI), 1-isocyanato-3,3,5-trimethyl-5-isocyanatomethylcyclohexane (= isophoronediisocyanate or IPDI), perhydro-2,4'- and -4,4'-diphenylmethane diisocyanate (HMDI or H12MDI) and mixtures of these isomers, 1,4- diisocyanato-2,2,6-trimethylcyclohexane (TMCDI), 1,3- and 1,4-bis(isocyanato-methyl)cyclohexane, m- and p-xylylene diisocyanate (m- and p-XDI) and mixtures of these isomers, m- and p-tetramethyl-1,3- and 1,4-xylylene diisocyanate (m- and p-TMXDI) and mixtures of these isomers, bis(1-isocyanato-1-methylethyl)naphthalene, 2,4- and 2,6-tolylene diisocyanate and mixtures of these isomers (TDI), 4,4'-diphenylmethane diisocyanate, optionally with proportions of 2,4'- and/or 2,2'-diphenylmethane diisocyanate (MDI), 1,3- and 1,4-phenylene diisocyanate (PDI) and mixtures of these isomers, naphthalene 1,5-diisocyanate (NDI), 3,3'-dimethyl-4,4'-diisocyanatobiphenyl (TODI), and dianisidine diisocyanate (DADI).

Suitable aliphatic and aromatic monomeric diisocyanates are commercially available, for example, under the trade names of Lupranat^{®} (from BASF), Desmodur (from Covestro), Cosmonate^{®} (from Mitsui Chemical), Millionate^{®} (from Tosoh), Wannate^{®} (from Wanhua chemical), and Duranate^{®} (from Asahi Kasei).

Further suitable monomeric diisocyanates include bio-based and recycled diisocyanates.

The term "bio-based" refers in the present disclosure to a material having a biocarbon content determined by using the standards ASTM D 6866 (ASTM D 6866-06) and ASTM D 7026 (ASTM D 7026-04) of at least 15 %, especially at least 25 %. The definition of bio-based further includes materials, in which the biocarbon content cannot be detected by the radiocarbon method due to time or dilution effects but is demonstrated and allocated by using relevant biomass balance (B:MB) methods.

The term "recycled" designates materials that have a recycled content of at least 15 wt.-%, especially at least 25 wt.-%. In this context, the expression "a recycled content of at least 15 wt.-%" is understood to mean that the material has been derived from a raw material that contains at least 15 wt.-% of recycled materials, especially recycled plastic materials. Furthermore, the term "recycled material" refers to a material that has been reprocessed from (reclaimed) waste material through a manufacturing process. The definition of recycled further includes materials, for which the recycled content can only be allocated by using relevant biomass balance (B:MB) methods.

Examples of suitable bio-based monomeric diisocyanates include, for example, bio-based 1,5-pentamethylenediisocyanate, which is commercially available under the trade name of Stabio^{®} PDI (from Mitsui Chemicals) and bio-based monomeric diisocyanates, which are commercially available under the trade name of Desmodur^{®} CQ.

In one embodiment, the at least one diisocyanate **PI** is selected from 4,4'-diphenylmethane diisocyanate (4,4'-MDI), 2,4'-diphenylmethane diisocyanate (2,4'-MDI), 2,2'-diphenylmethane diisocyanate (2,2' MDI), or mixtures of these isomers, tolylene diisocyanate (TDI), particularly 2,4-tolylene diisocyanate (2,4 TDI), 2,6-tolylene diisocyanate (2,6 TDI), or mixtures of these isomers, 1,6-hexamethylene diisocyanate (HDI), 1-isocyanato-3,3,5-trimethyl-5-isocyanatomethylcyclohexane (IPDI), and their bio-based versions. Furthermore, a person skilled in the art knows that the technical grade products of diisocyanates may frequently contain isomer mixtures or other isomers as impurities.

Preferably, the polyol **PO** is selected from polyester polyols, polyether polyols, polycarbonate polyols, and poly(tetramethylene ether)glycol.

Preferred polyester polyols include, liquid, amorphous, partially crystalline, and crystalline polyester polyols. These can be obtained from by reacting dihydric and trihydric, preferably dihydric, alcohols, for example, 1,2-ethanediol, diethylene glycol, triethylene glycol, 1,2-propanediol, 1,3-propanediol, dipropylene glycol, 1,4-butanediol, 1,5-pentanediol, 1,6-hexanediol, 1,8-octanediol, 1,10-decanediol, 1,12-dodecanediol, dimer fatty alcohol, neopentyl glycol, glycerol, 1,1,1-trimethylolpropane or mixtures of the aforesaid alcohols, with organic dicarboxylic acids or tricarboxylic acids, preferably dicarboxylic acids, or their anhydrides or esters, such as succinic acid, glutaric acid, 3,3-dimethylglutaric acid, adipic acid, suberic acid, sebacic acid, undecanedioic acid, dodecanedicarboxylic acid, azelaic acid, maleic acid, fumaric acid, phthalic acid, dimer fatty acid, isophthalic acid, terephthalic acid, and hexahydrophthalic acid, or mixtures of the aforesaid acids, and also polyester polyols made from lactones such as from ε-caprolactone, for example, also known as polycaprolactones.

Preferred polyester polyols include those obtained by reacting adipic acid, sebacic acid or dodecanedicarboxylic acid as dicarboxylic acid and hexanediol or neopentyl glycol as dihydric alcohol. Further examples of suitable polyester polyols include polyester polyols of oleochemical origin. Polyester polyols of this type may be prepared, for example, by complete ring opening of epoxidized triglycerides of a fat mixture comprising at least partially olefinically unsaturated fatty acids, with one or more alcohols having 1-12 carbon atoms, and by subsequent partial transesterification of the triglyceride derivatives to give alkyl ester polyols having 1-12 carbon atoms in the alkyl radical. Particularly suitable crystalline or semicrystalline polyester polyols include adipic acid/hexanediol polyester and dodecanedicarboxylic acid/hexanediol polyesters.

Further suitable polyester polyols include bio-based and recycled polyester polyols.

For example, crystalline polyester polyols having a biocarbon content determined by using the standards ASTM D 6866 (ASTM D 6866-06) and ASTM D 7026 (ASTM D 7026-04) of 100 % can be produced by from plant-based sebacic acid as carboxylic acid and plant-based 1,3 propanediol as the diol.

Preferred polyester polyols may further include copolymers with polyether polyols. These types of polyester polyols have the advantage of excellent compatibility with the polyether polyols described below.

Preferred polyether polyols include polyoxyalkylenepolyols.

These are products of the polymeriziation of ethylene oxide, 1,2-propylene oxide, 1,2- or 2,3-butylene oxide, oxetane, tetrahydrofuran or mixtures thereof, optionally polymerized using a starter molecule with two or more active hydrogen atoms, such as water, ammonia or compounds with several OH- or NH-groups, such as 1,2-ethanediol, 1,2- and 1,3-propanediol, neopentylglycol, diethyleneglycol, triethyleneglycol, the isomeric dipropylene-glycols and tripropyleneglycols, the isomeric butanediols, pentanediols, hexanediols, heptanediols, octanediols, nonanediols, decanediols, undecanediols, 1,3- and 1,4-cyclohexanedimethanol, bisphenol A, hydrogenated bisphenol A, 1,1,1-trimethylolethane, 1,1,1-trimethylolpropane, glycerol, aniline, as well as mixtures of the above-mentioned compounds.

Preferred are both polyoxyalkylenepolyols with a low degree of unsaturation (measured according to ASTM D-2849-69 and indicated in milliequivalents of unsaturation per gram of polyol (meq/g)), obtainable, for example, by using so-called double metal cyanide complex catalysts (DMC catalysts), and polyoxy-alkylenepolyols with a higher degree of unsaturation, obtainable, for example, by using anionic catalysts such as NaOH, KOH, CsOH or alkali alcoholates. Particularly preferred polyoxyalkylenepolyols are polymerization products of ethylene oxide and/or propylene oxide.

Particularly suitable polyether polyols include polyoxyalkylene diols and poly-oxyalkylene triols, especially polyoxyethylene diols and triols and polyoxypropylene diols and triols, preferably having a number average molecular weight (Mₙ) in the range of 400 - 15000 g/mol, especially 500 - 10000 g/mol.

Likewise particularly suitable polyether polyols are what are known as ethylene oxide-terminated ("EO-endcapped", ethylene oxide-endcapped) polyoxypropylene polyols. The latter are special polyoxypropylene polyoxyethylene polyols that are obtained for example when pure polyoxypropylene polyols, especially polyoxypropylene diols and triols, are at the end of the polypropoxylation reaction further alkoxylated with ethylene oxide and thus have primary hydroxyl groups. Preference in this case is given to polyoxypropylene polyoxyethylene diols and polyoxypropylene polyoxyethylene triols.

Furthermore likewise, particularly suitable polyether polyols include polytetramethylene glycol (PTMG, poly-THF), which is produced, for example, by ring-opening polymerization of tetrahydrofuran. This type of polyether polyol generally has crystalline properties that may make it especially suitable for use as a polyol component in reactive hot-melt adhesives, for example, due to excellent mechanical properties compared to some other polyether polyols.

Further suitable polyether polyols include bio-based and recycled polyether polyols.

For example, polytetramethylene glycol (poly-THF, PTMG) having a biocarbon content determined by using the standards ASTM D 6866 (ASTM D 6866-06) and ASTM D 7026 (ASTM D 7026-04) of nearly 100 % can be produced from tetrahydrofuran made from plant-based 1,4 butanediol.

Suitable polyether polyols are commercially available, for example, under the trade name of Acclaim^{®}, Desmophene^{®}, and Arcol^{®} (all from Covestro); under the trade name of Voranol^{®} (from Dow); under the trade name of Excenol^{®}, and Preminol^{®} (all from AGC); under the trade name of Velvetol^{®} (from Allessa); under the trade name of PTMG^{®}, and Bio PTMG (all from Mitsubishi Chemical); under the trade name of Caradol^{®} (from Shell Chemicals); and under the trade name of Dianol^{®} (from Arkema).

Further particularly preferred polyols are polycarbonate polyols, particularly products of the polycondensation of dialkyl carbonates, diaryl carbonates or phosgene with diols or triols such as ethylene glycol, diethylene glycol, pro-pylene glycol, dipropylene glycol, neopentyl glycol, 1,4-butanediol, 1,5-pen-tanediol, 3-methyl-1,5-hexanediol, 1,6-hexanediol, 1,8-octanediol, 1,10-de-canediol, 1,12-dodecanediol, 1,12-octadecanediol, 1,4-cyclohexane dimetha-nol, dimeric fatty acid diol (dimeryl diol), hydroxypivalic neopentylglycol ester, glycerol and 1,1,1-trimethylolpropane.

Suitable polycarbonate polyols may also include polyether units (polyether-polycarbonate polyols), for example, to promote compatibility with the polyether polyols mentioned above. These types of polyether polyols may also work as a compatibilizer between the above-mentioned polyester polyols and polyether polyols. Particularly, use of polyether-polycarbonate polyols may be preferred since they can be, for example, often be used to improve adhesion properties of hot-melt adhesives, particularly to the polar substrates, such as metals, which improvement cannot be achieved using other types of polyols, particularly with crystalline polyester polyols or polyether polyols. Suitable polyether polycarbonate polyols may be produced by the reaction of carbon dioxide and epoxide in the presence of a catalyst. Such reaction route may be preferred from environmental point of view since it consumes carbon dioxide and the production of polyether polycarbonate polyols has, therefore, a potential to reduce amount of atmospheric CO₂.

Along with the above-mentioned polyols, small amounts of low molecular weight divalent or multivalent alcohols can be used, such as 1,2-ethanediol, 1,2-propanediol, neopentyl glycol, dibromoneopentyl glycol, diethylene glycol, triethylene glycol, the isomeric dipropylene glycols and tripropylene glycols, the isomeric butanediols, pentanediols, hexanediols, heptanediols, octanediols, no-nanediols, decanediols, undecanediols, 1,3- and 1,4-cyclohexanedimethanol, hydrogenated bisphenol A, dimer fatty alcohols, 1,1,1-trimethylolethane, 1,1,1-trimethylolpropane, glycerol, pentaerythritol, sugar alcohols, such as xylitol, sorbitol or mannitol, sugars, such as saccharose, other polyhydric alcohols, low molecular weight alkoxylation products of the above-mentioned divalent or multivalent alcohols, as well as mixtures of the above-mentioned alcohols.

In one embodiment, the at least one polyol **PO** comprises at least one crystalline polyester polyol **PO1** and/or at least one crystalline polyether polyol **PO2** and/or at least one polycarbonate polyol **PO3** and/or at least one polyether-polycarbonate polyol **PO4.**

In the context of the present document, the expression "component X comprises at least one Xn" is understood to mean that the component Xn is present in a composition, for example, in a reaction mixture used for preparing the polyurethane polymer **PU,** as a representative of the component X.

Particularly, the crystalline polyester polyol **PO1,** the crystalline polyether polyol **PO2,** the polycarbonate polyol **PO3,** and the polyether-polycarbonate polyol **PO4** may have a weight average molecular weight (M_{w}) of not more than 15000 g/mol, preferably not more than 10000 g/mol, particularly in the range of 500 - 7500 g/mol, especially 1000 - 5000 g/mol.

In one exemplary embodiment, the at least one polyol **PO** comprises at least one crystalline polyester polyol **PO1**, at least one crystalline polyether polyol **PO2**, and at least one the polyether-polycarbonate polyol **PO4**.

In one further exemplary embodiment, the at least one crystalline polyester polyol **PO1** makes up at least 35 wt.-%, preferably at least 50 wt.-%, especially 45 - 95 wt.-%, particularly 65 - 85 wt.-% of the total weight of all polyols **PO** in the reaction mixture used for preparing the polyurethane polymer **PU** and/or the at least one crystalline polyether polyol **PO2** makes up not more than 35 wt.-%, preferably not more than 25 wt.-%, especially 2.5 - 30 wt.-%, particularly 5-20 wt.-% of the total weight of all polyols **PO** in the reaction mixture used for preparing the polyurethane polymer **PU** and/or the at least one the polyether-polycarbonate polyol **PO4** makes up not more than 35 wt.-%, preferably not more than 25 wt.-%, especially 2.5 - 30 wt.-%, particularly 5-20 wt.-% of the total weight of all polyols **PO** in the reaction mixture used for preparing the polyurethane polymer **PU.**

The adhesive composition may further comprise auxiliary substances and additives, for example, those selected from the group consisting of fillers, flame retardants, plasticizers, adhesion promoters, UV absorption agents, UV and heat stabilizers, optical brighteners, pigments, dyes, and desiccants. Examples of suitable UV and heat stabilizers (antioxidants) that can be added to the adhesive composition include, for example, sterically hindered phenols.

Suitable fillers for use in the hot-melt adhesive composition include, for example, inorganic and organic fillers, especially natural, ground or precipitated calcium carbonates, optionally coated with fatty acids or fatty acid esters, especially stearic acid, baryte (heavy spar), talcs, quartz flours, quartz sand, dolomites, wollastonites, kaolins, calcined kaolins, mica (potassium aluminum silicate), molecular sieves, aluminum oxides, aluminum hydroxides, magnesium hydroxide, silicas including finely divided silicas from pyrolysis processes, industrially produced carbon blacks, graphite, metal powders such as aluminum, copper, iron, silver or steel, PVC powder or hollow spheres.

The adhesive composition as described above can be prepared by melt mixing the polyurethane prepolymer **PU,** the metal catalyst **C,** and the complexing agent **CA** at an elevated temperature to obtain a homogeneously mixed mixture.

The term "melt-mixing" refers in the present disclosure to a processing operation wherein a polymer is heated above its melting point/softening point in order to mix or blend other materials, such as other polymers, into the polymer.

Melt-mixing of the constituents can be conducted using any conventional mixing apparatus, such as a dispersion mixer, planetary mixer, such as planetary roller, extruder such as a twin-screw extruder, kneader, such as a Buss, Banbury, or roller kneader, or a two-roll mill. In such cases, the system should be closed to prevent moisture contamination.

The term "homogeneously mixed mixture" refers in the present disclosure to compositions, in which the individual constituents are distributed substantially homogeneously in the composition. Furthermore, a homogeneously mixed mixture can be a multi-phase mixture. For a person skilled in the art it is clear that within homogeneously mixed compositions there may be regions formed, which have a slightly higher concentration of one of the constituents than other regions and that a 100 % homogeneous distribution of all the constituents is generally not achievable. Such mixed compositions with "imperfect" distribution of constituents, however, are also intended to be included by the term "homogeneously mixed mixture" in accordance with the present invention.

Another aspect of the present invention is use of the adhesive composition as described above in industrial lamination or packaging applications or in assembly of automotive vehicles or electronic devices.

Particularly, the adhesive composition as described above may be used for bonding of textiles, wood, or metal surfaces or for lamination of decorative films to plastic or for bonding of sheets over cushioning materials.

Still another aspect of the present invention is a method for adhesively bonding a first substrate to a second substrate, the method comprising steps of:
I) Providing a one-part adhesive composition as described above,
II) Optionally heating the one-part adhesive composition to provide a melted adhesive composition,
III) Applying the one-part adhesive composition or the melted one-part adhesive composition to a surface of the first substrate to form an adhesive body,
IV) Mating the first substrate obtained from step III) with a second substrate such that a surface of the second substrate is directly contacted with a surface of the adhesive body, and
V) Optionally applying a pressure on the first and/or second substrate.

The term "adhesive body" refers in the context of the present disclosure to a mass of the adhesive composition applied to a surface of a substrate in any form, for example into a film, bead, or dot.

The one-part adhesive composition or the melted one-part adhesive composition can be applied on the surface of the first substrate using any conventional technique, for example, by coating, for example, by slot die coating, roller coating, extrusion coating, calender coating, or by spray coating, or by using extrusion or spraying means.

In an exemplary embodiment, the one-part adhesive composition is a hot-melt adhesive composition, wherein the method comprises steps of:
I) Providing the one-part adhesive composition,
II) Heating the one-part adhesive composition to provide a melted adhesive composition,
III) Applying the melted adhesive composition to a surface of the first substrate to form an adhesive body,
IV) Mating the first substrate obtained from step III) with a second substrate such that a surface of the second substrate is directly contacted with a surface of the adhesive body, and
V) Optionally applying a pressure on the first and/or second substrate.

The hot-melt adhesive composition may be heated in step II) to a temperature of 80 - 135 °C, particularly 80- 125 °C, especially 80 - 110 °C.

After the adhesive body has been contacted with the surface of the second substrate in step IV), the hot-melt adhesive composition develops a certain initial adhesive strength by physical curing (solidification) upon cooling.

Depending on the type of the complexing agent **CA,** different types of chemical reactions may take place when the adhesive composition is contacted with water, typically with atmospheric moisture. Without being bound to any theory, the complexing agent **CA** of formula (I) may react with water to form mercapto silanes, which may further react with the polyurethane prepolymer **PU** present in the adhesive composition. The consumption of the complexing agent **CA** (and mercapto silanes) may result in increase of the catalytic activity of the metal catalyst **C,** which is catalyzes the reactions of isocyanate groups with water.

In another exemplary embodiment, the one-part adhesive composition is a at normal room temperature liquid adhesive composition, wherein the method comprises steps of:
I) Providing the one-part adhesive composition,
II) Applying the one-part adhesive composition to a surface of the first substrate to form an adhesive body,
III) Mating the first substrate obtained from step III) with a second substrate such that a surface of the second substrate is directly contacted with a surface of the adhesive body, and
V) Optionally applying a pressure on the first and/or second substrate.

The first and second substrates can be composed of any conventional material including polymeric material, metal, painted metal, glass, wood, wood derived materials such as natural fiber polypropylene (NFPP), and fiber-based materials. Suitable polymeric materials include, for example, non-foamed and foamed polyethylene (PE), particularly high density polyethylene (HDPE), polypropylene (PP), propylene copolymers, glass-fiber reinforced polypropylene (GFPP), polyvinyl chloride (PVC), polyethylene terephthalate (PET), polystyrene (PS), polycarbonate (PC), polymethylmethacrylate (PMMA), acrylonitrile butadiene styrene (ABS), polyamide (PA), thermoplastic olefin elastomers (TPO), and combinations thereof. Suitable fiber-based materials include, for example, woven and non-woven fabrics, particularly comprising synthetic organic fibers.

Furthermore, the first and second substrates can be composed of a single layer or of multiple layers of different types of materials. The layer(s) composed of polymeric materials can further contain additives such as fillers, plasticizers, flame retardants, thermal stabilizers, antioxidants, pigments, dyes, and biocides.

Still another aspect of the present invention is a composite element obtainable by using the method for adhesively bonding a first substrate to a second substrate as described above.

The composite element of the present invention can be used, for example, for providing interior lining components of automotive vehicles. Examples of such interior lining components include door panel pieces, switch panels, rear parcel shelves, head liners, sliding roofs, center consoles, glove compartments, sun visors, pillars, door handles, arm rests, flooring, cargo flooring, and trunk area flooring as well as sleeping cabins and rear panels of trucks.

### Examples

The followings compounds and products shown in Table 1 were used in the examples.

**Table 1**

| | | |
|---|---|---|
| Polyol **PO1** | Plant-based crystalline Polyester Polyol from 1,3 Propane diol/Sebacic Acid, M_{w} 2000 g/mol, biocarbon content 100 % | Hokoku Cooperation |
| Polyol **PO2** | Crystalline Polyether Polyol (polytetramethylene glycol), M_{w} 2000 g/mol, biocarbon content > 95 % | Mitsubishi Chemical |
| Polyol **PO4** | Polyether polycarbonate diol, M_{w} 3300 g/mol, carbon dioxide reactant with epoxide, carbon dioxide content 30% | Hangzhou POLY Material Technology Co., Ltd |
| Diisocyanate **PI** | Methylene diphenyl diisocyanate (MDI), biocarbon content ca. 60 % (mass balance) | Covestro |
| Catalyst **C1** | Neostann^{®} U-600 (2-ethylhexanoic acid bismuth salt) | Nitto Kasei Co., Ltd. |
| Catalyst **C2** | Jeffcat DMDEE Catalyst (Dimorpholinodiethylether, tertiary amine catalyst) | Huntsman International LLC. |
| Complexing agent **CA1** | Triethoxysilyl 3-(trimethoxysilyl)propyl sulfide) | |
| Complexing agent **CA2** | KBM-803 (3-Mercaptopropyltrimethoxysilane) | Shin-Etsu Chemical Co., Ltd.) |

The adhesive compositions presented in Table 2 were prepared according to the procedures as presented below.

### Preparation of polyurethane prepolymers PU

The polyols (PO1, PO2, PO4) were charged into a stainless-steel reactor and kept under vacuum with stirring at 140 °C for 120 minutes to dewater the component. The temperature of the mixture was lowered to 120 °C and the diisocyanate (PI) was added under a nitrogen blanket. The thus obtained starting mixture was then reacted with stirring for 90 minutes under vacuum at a temperature of 120 °C to obtain a reaction mixture containing a reaction product of the diisocyanate and the polyol and some unreacted diisocyanate.

The thus obtained polyurethane prepolymer PU had NCO content determined by using the method as defined in ISO 11909:2007 standard of 3.8 wt.-%. The reaction product was filled into a metal tube, which did not allow penetration of moisture, or into a package with a glass container and a set of gas-tight inner and outer lids, using aluminum foil as the inner lid, and stored at room temperature under exclusion of moisture before being used for preparation of the inventive and reference adhesive compositions.

### Preparation of adhesive compositions

The prepolymer (PU) prepare as described above was first melted by heating and charged into a stainless steel reactor and stirred at 110 °C under reduced pressure. The complexing agent (CA1 or CA2) and the catalyst (C1 or C2) were then added to the reactor and the thus obtained mixture was kept under stirring at 110 °C for 30 minutes. When the complexing agent (CA) and catalyst (C) were used in combination, a mixture of the two at the desired ratio was prepared in advance and stored in an airtight container for one day at normal room temperature. The mixture was then added into the stainless steel reactor and mixed with the other constituents as described above. The prepared adhesive compositions were filled into metal tubes and stored at room temperature under exclusion of moisture before measuring of adhesive properties using the methods as described below.

### Measurement methods

The adhesive compositions were characterized using the following measurement methods.

### Lap shear strength (LSS)

The tested adhesive composition provided in a sealed metal tube was preheated in an oven at a temperature of 110 °C for 30 minutes. After the heating, a sample of the molten adhesive was applied on the surface of a stainless SPCC (Steel Plate Cold Rolled Commercial) steel or aluminum (A6063S) substrate having dimensions of 2.5 cm (width) × 10 cm (length) and a thickness of 0.8 mm (SPCC substrate) or 3 mm (aluminum substrate). The molten adhesive was applied as a bead having dimensions of 2.5 cm (width) × 1.25 cm (length) × 2 mm (thickness). Furthermore, polypropylene spacers having a thickness of 2 mm were placed on the substrate (adherend) to ensure an even bonding area of 2.5 cm × 1.25 cm × 2 mm.

Immediately after the application of the adhesive a second SPCC steel or aluminum substrate having same dimensions as the first substrate was positioned over the first substrate along the edge of the substrate and the adhesive bead to form a test composite element (single lap joint specimen). The second substrate was pressed firmly against the first substrate to remove air from adhesive bond. A weigh of 500 g was placed on the top surface of the second substrate. Any adhesive squeezed out from the joint was trimmed off with a knife. The test composite element was stored at standard climatic conditions (23 °C, 55 % relative humidity) for a period of 24 hours, 72 hours, or 168 hours before measuring of the lap shear strengths.

Lap shear strengths were measured according to JIS K 6850 standard using a material testing apparatus (SHIMAZU AUTOGRAPH AG-IS) and a test speed 10 mm/min. The values for each adhesive composition presented in Table 2 have been obtained as an average of three measurements conducted with identical test composite elements prepared by using the same adhesive composition.

### Thermal stability - increase in viscosity

Thermal stability of the adhesive compositions was analyzed by determining the increase in viscosity during storage at 120 °C for 1.5 to 3 hours.

The viscosity of the tested adhesive composition was determined by using a Brookfield viscometer (Type DV-2T). The molten adhesive was dosed into a viscosity tube maintained at 120 °C and the viscosity was measured at 5 rpm using No. 27 rotor. By keeping the rotor rotating, the viscosity was checked 1.5, 2.0, 2.5 and 3.0 hours after the start of the measurement.

### Curing rate

The curing rate (reactivity with moisture) of adhesive compositions was determined according to the following procedure.

A sample of molten adhesive was applied as film having a thickness of 500 µm to a surface of a substrate using a bar-coater. The adhesive film was then aged at room temperature (20 °C, 50 % relative humidity) for a period of 24 hours, during which the curing rate was determined by Fourier Transform Infrared (FT-IR) (reflection method) from the disappearance of isocyanate groups at 2270 cm⁻¹ peak (NCO asymmetry stretching vibration) due to reaction with moisture. The height of the peak corresponding to the C-H stretching vibration at 2295 cm⁻¹ was used as the internal standard.

**Table 2**

| **Composition [wt.-%]** | **Ref-1** | **Ex-1** | **Ex-2** | **Ref-2** | **Ref-3** |
|---|---|---|---|---|---|
| Polyol **PO1** | 59.43 | 59.31 | 59.35 | 59.41 | 59.31 |
| Polyol **PO2** | 9.90 | 9.89 | 9.89 | 9.90 | 9.89 |
| Polyol **PO4** | 9.90 | 9.89 | 9.89 | 9.90 | 9.89 |
| Diisocyanate **PI** | 20.76 | 20.72 | 20.73 | 20.75 | 20.72 |
| Catalyst **C1** | - | 0.0340 | 0.0341 | 0.0341 | 0.00 |
| Catalyst **C2** | - | - | - | - | 0.2001 |
| Complexing agent **CA1** | - | 0.1652 | - | - | - |
| Complexing agent **CA2** | - | - | 0.1045 | - | - |
| **Total** | 100.00 | 100.00 | 100.00 | 100.00 | 100.00 |

| **Lap shear strength [MPa]** | | | | | |
|---|---|---|---|---|---|
| Steel @RT after 24 hour aging | 1.8 | 3.1 | 3.3 | 2.1 | *n.a. |
| Steel @RT after 72 hour aging | 4.5 | 4.8 | 4.5 | 3.7 | *n.a. |
| Steel @RT after 168 hour aging | 5.3 | 6.0 | 6.2 | 3.9 | *n.a. |
| Aluminum @RT after 24 hour aging | 0.3 | 2.6 | 2.5 | 2.0 | *n.a. |
| Aluminum @RT after 72 hour aging | 4.7 | 5.9 | 6.1 | 4.0 | *n.a. |
| Aluminum @RT after 168 hour aging | 7.0 | 7.4 | 7.5 | 4.2 | *n.a. |

| **Viscosity increase [%]** | | | | | |
|---|---|---|---|---|---|
| After 1.5 hours @120 °C | 6.6 | 10.5 | 98.4 | 68.2 | 5.3 |
| After 2 hours @120 °C | -2.6 | 22.1 | 151.9 | 198.5 | 15.0 |
| After 2.5 hours @120 °C | -5.3 | 45.2 | 335.2 | 466.7 | 21.1 |
| After 3 hours @120 °C | 0.0 | 78.1 | 321.6 | 1134.8 | 35.0 |
| Curing rate 24 hours [%] | 69 | 82 | - | - | 95 |

| | | | | | |
|---|---|---|---|---|---|
| *n.a. = 100 % adhesive failure (lap shear strength below 1.0 MPa) | | | | | |

## Claims

1. A one-part adhesive composition comprising:
a) A polyurethane polymer **PU** having isocyanate groups,
b) At least one complexing agent **CA,** and
c) At least one metal catalyst **C** that can catalyze reactions between isocyanate groups and isocyanate reactive groups and that can build thiol complexes,
wherein the complexing agent **CA** is a sulfide compound having at least one hydrolysable silane group.

2. The one-part adhesive composition according to claim 1, wherein the one-part adhesive composition is a hot-melt adhesive composition.

3. The one-part adhesive composition according to claim 1, wherein the one-part adhesive composition is a at normal room temperature liquid adhesive composition.

4. The one-part adhesive composition according to any one of previous claims, wherein the complexing agent **CA** is selected from sulfur silanes and mercapto silanes.

5. The one-part adhesive composition according to any one of previous claims, wherein the complexing agent **CA** is a compound of formula (I) 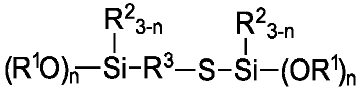
where R¹ and R² are each independently of each other a hydrocarbon group that may have one or more heteroatoms, preferably having 1 to 8 carbon atoms,
n is an integer of 1 to 3, and
R³ is a hydrocarbon group that may have one or more heteroatoms, preferably having 1 to 12 carbon atoms.

6. The one-part adhesive composition according to claim 5, wherein R¹ and R² are each independently of each other a hydrocarbon group having 1 to 5 carbon atoms, preferably 1 to 3 carbon atoms, n is 3, and R³ is a hydrocarbon group having 1 to 8 carbon atoms, preferably 1 to 5 carbon atoms.

7. The one-part adhesive composition according to any one of previous claims,
wherein the complexing agent **CA** is a triethoxysilyl 3-(trimethoxysilyl)propyl sulfide.

8. The one-part adhesive composition according to any one of previous claims,
wherein the molar ratio of all sulfur atoms in the complexing agent **CA** to all metal atoms in the metal catalyst **C** is in the range of 1:1 to 20:1, preferably 2:1 to 15:1.

9. The one-part adhesive composition according to any one of previous claims,
wherein the sum of the amounts of the metal catalyst **C** and the complexing agent **CA** makes up 0.01 - 1.0 wt.-%, preferably 0.05 - 0.5 wt.-% of the total weight of the adhesive composition.

10. The one-part adhesive composition according to any one of previous claims,
wherein the metal catalyst **C** is selected from salts and complexes of bismuth, zinc, tin, zirconium, titanium, iron, lead, and aluminum.

11. The one-part adhesive composition according to any one of previous claims,
wherein the metal catalyst **C** is selected from salts and complexes of bismuth, tin, and zirconium, preferably of bismuth (III) or zirconium (IV), particularly with ligands selected from alcoholates, carboxylates, 1,3-diketonates, oxinates, 1,3-ketoesterates, and 1,3-ketoamidates.

12. The one-part adhesive composition according to any one of previous claims,
wherein the metal catalyst **C** is bismuth(III) tris(2-ethylhexanate).

13. The one-part adhesive composition according to any one of previous claims,
wherein the polyurethane polymer **PU** is obtained from reacting at least one polyol **PO** and at least one diisocyanate **PI**, wherein the molar ratio between isocyanate groups and hydroxyl groups is preferably in the range of 1.3 - 3.5, preferably 1.5 - 3.0.

14. The one-part adhesive composition according to claim 13, wherein the at least one polyol **PO** is selected from polyester polyol, polyether polyol, polycarbonate polyol, and poly(tetramethylene ether)glycol.

15. The one-part adhesive composition according to claim 13 or 14, wherein the at least one diisocyanate **PI** is monomeric diisocyanate, preferably having a number average molecular weight (Mₙ) of not more than 500 g/mol, more preferably not more than 300 g/mol.

16. A method for adhesively bonding a first substrate to a second substrate, the method comprising steps of:
I) Providing an adhesive composition according to any one of claims 1-15,
II) Optionally heating the adhesive composition to provide a melted adhesive composition,
III) Applying the adhesive composition or the melted adhesive composition to a surface of the first substrate to form an adhesive body, and
IV) Mating the first substrate obtained from step II) with a second substrate such that a surface of the second substrate is directly contacted with a surface of the adhesive body.

17. Use of the one-part adhesive composition according to any one of claims 1-15 in industrial lamination or packaging applications or in assembly of automotive vehicles or electronic devices.
